(19) **Europäisches Patentamt European Patent Office Office européen des brevets**

(11) **EP 4 100 870 B1**

(12) **FASCICULE DE BREVET EUROPEEN**

(45) Date de publication et mention de la délivrance du brevet:
**21.05.2025   Bulletin 2025/21**

(21) Numéro de dépôt: **21702677.2**

(22) Date de dépôt: **03.02.2021**

(51) Classification Internationale des Brevets (IPC):
***G06V 40/12*** *(2022.01)*

(52) Classification Coopérative des Brevets (CPC):
**G06V 40/1353; G06V 40/1371**

(86) Numéro de dépôt international:
**PCT/EP2021/052500**

(87) Numéro de publication internationale:
**WO 2021/156283 (12.08.2021 Gazette 2021/32)**

(54) **PROCEDE ET DISPOSITIF POUR IDENTIFIER UN INDIVIDU A PARTIR D'UNE DONNEE BIOMETRIQUE**

**VERFAHREN UND VORRICHTUNG ZUR IDENTIFIZIERUNG EINER PERSON AUS EINEM BIOMETRISCHEN DATUM**

**METHOD AND DEVICE FOR IDENTIFYING A PERSON FROM A BIOMETRIC DATUM**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:   **06.02.2020   FR 2001172**

(43) Date de publication de la demande:
**14.12.2022   Bulletin 2022/50**

(73) Titulaire: **Imprimerie Nationale**
**75116 Paris (FR)**

(72) Inventeurs:
• **FALADE, Joannes**
**78330 FONTENAY LE FLEURY (FR)**
• **CREMER, Sandra**
**78140 VELIZY-VILLACOUBLAY (FR)**
• **ROSENBERGER, Christophe**
**78140 VELIZY-VILLACOUBLAY (FR)**

(74) Mandataire: **Brun, Philippe Alexandre Georges**
**Med'inVent Consulting**
**Espace Mistral - Bât.A**
**297 avenue du Mistral**
**ZI ATHELIA IV**
**13705 La Ciotat Cedex (FR)**

(56) Documents cités:
**FR-A1- 2 951 842        US-A1- 2006 104 484
US-A1- 2007 253 608**

• **FALADE JOANNES ET AL: "Comparative Study of Fingerprint Database Indexing Methods", 2019 INTERNATIONAL CONFERENCE ON CYBERWORLDS (CW), IEEE, 2 October 2019 (2019-10-02), pages 295 - 298, XP033644947, DOI: 10.1109/CW.2019.00055**

**Description**

L'invention concerne un procédé et un dispositif permettant d'identifier un individu à partir d'une donnée biométrique. La donnée biométrique peut être des empreintes digitales, un visage, l'iris.

L'identification d'un individu se fait habituellement en utilisant des données mémorisées dans une base de données qui se révèle être volumineuse lorsque l'on utilise des empreintes digitales, la taille de la base (ordre de l'échelle d'un pays, nombre d'individus par pays) peut être de l'ordre de $10^7$. La comparaison exhaustive des empreintes de l'individu recherché avec les N jeux d'empreintes de la base de données est donc très coûteuse en temps de calcul.

Différentes solutions existent dans l'art antérieur pour classifier ou indexer des empreintes, afin de pouvoir sélectionner un sous-ensemble de la base de données contenant les empreintes les plus ressemblantes à celles de l'individu recherché et diminuer le volume de données à utiliser pour la comparaison.

Une des méthodes d'indexation est la technique basée sur des structures de données 3D (appelées cylindres), construites à partir de distances et d'angles minutieux, plus connue sous l'abréviation anglo-saxonne « MCC » par code cylindrique de minuties (en anglo-saxon Minutia Cylinder-Code). Cette méthode consiste à représenter chaque minutie de l'empreinte en considérant son voisinage local. Le voisinage local d'une minutie présente le comportement de cette minutie centrale par rapport à ses voisins proches. Cette représentation locale du voisinage de la minutie se fait en format binaire utilisant uniquement des « 0 » et des « 1 ». La méthode d'indexation MCC utilise donc une représentation binaire des gabarits en considérant chaque minutie de l'empreinte comme une suite binaire. Un gabarit MCC T est une collection de |T| minuties $m_i$ binaires de longueur $n$. L'indexation MCC consiste à construire des index sur chaque minutie $m_i$ du gabarit de référence reçu à l'enrôlement d'individus. Pour l'identification de l'individu, la méthode extrait toutes ces minuties au format binaire. Ensuite, pour chacune de ces minuties, on calcule les index en utilisant des fonctions de hachage, puis on compte les différentes collisions avec les individus déjà enrôlés dans la base. Lorsque l'on met en œuvre cette méthode, la perte d'un index a un impact important, car elle correspond à une perte d'information et à une augmentation possible du taux d'erreur pour l'identification. De plus, cette méthode nécessite la création d'une table d'index très volumineuse. Une telle méthode n'est donc pas vraiment adaptée pour adresser des problèmes d'identification à grande échelle et dans un laps de temps contraint.

Le document de J. Falade et al, intitulé « Comparative Study of Fingerprint Database Indexing Methods », 2019, International Conference on Cyberworlds, IEEE, XP 033644947, concerne une étude comparative de différentes méthodes d'indexation connues de l'art antérieur.

L'enseignement technique du brevet FR 2 951 842 décrit un procédé permettant d'améliorer la recherche d'identifiant de documents dans une base de données. L'utilisateur est identifié par un identifiant $I_d$ qui va être associé dans une base de données à une donnée biométrique captée.

La demande de brevet US 2006/104484 divulgue la recherche de "template" au sein d'une base de données.

Un des objectifs de la présente invention est d'offrir un procédé d'identification d'un individu au moyen de données biométriques qui corrige notamment la perte éventuelle d'informations sur l'enrôlement et l'identification des gabarits afin d'optimiser les chances d'identification d'un individu. De plus cette méthode, du fait de la création de centres de classes et d'index synthétiques, permet une recherche plus rapide dans des bases de données volumineuses. Ces bases de données sont de l'ordre de l'échelle d'un pays par exemple $10^7$ individus.

Dans la suite de la description, le terme « représentatif » signifie que les index synthétiques créés sont en nombre suffisant pour couvrir l'espace de l'ensemble des index nécessaires pour réaliser le stockage d'une base de données biométriques, par exemple des empreintes digitales.

Le terme « discriminant » signifie que les index synthétiques ne se chevauchent pas, sont uniques et suffisamment distant deux à deux.

Le terme « gabarit » désigne les mesures qui sont mémorisées lors de l'enregistrement des caractéristiques morphologiques (empreinte digitale, forme de la main, iris, ...), biologiques ou comportementales de la personne concernée.

Par abus de langage, on utilisera l'expression « donnée biométrique » pour désigner aussi les caractéristiques comportementales d'une personne.

L'invention concerne un procédé d'identification d'un individu à partir d'informations contenues dans une base de données caractérisé en ce qu'il comporte au moins les étapes suivantes :

- Générer ou utiliser une table contenant des index synthétiques correspondant à un ensemble d'intervalles autour d'un centre de classe,

- Enrôler plusieurs données biométriques en exécutant les étapes suivantes :

  - Pour chaque donnée biométrique à enrôler, calculer un gabarit binaire lié à chaque paramètre caractéristique d'une donnée biométrique,

- Utiliser une méthode de hachage afin d'obtenir plusieurs index pour chaque gabarit binaire,

- Pour chaque index obtenu pour une donnée biométrique, insérer un identifiant correspondant à la donnée biométrique minimisant la distance de Hamming entre l'index considéré et les index synthétiques bornant une case, afin d'obtenir une table contenant des couples {identifiant donnée biométrique, identifiant individu},

- Capturer au moins une donnée biométrique propre à l'individu au moyen d'un capteur adapté,

- Rechercher dans la table (contenant les index synthétiques) la ou les données biométriques les plus proches, comparer la donnée biométrique capturée aux données biométriques de la base de données d'enrôlement et générer un résultat d'identification en cas de correspondance entre lesdites données comparées ou de non identification de l'individu et traiter le résultat obtenu.

Selon une variante, on utilise les empreintes digitales pour identifier un individu et on exécute les étapes suivantes :

- Enrôler plusieurs empreintes en exécutant les étapes suivantes :

   - Pour chaque empreinte, calculer un gabarit binaire lié à chaque minutie d'une empreinte en utilisant une méthode par code cylindrique de minuties MCC,

   - Utiliser une méthode de hachage afin d'obtenir plusieurs index pour chaque gabarit binaire,

   - Pour chaque index obtenu pour une empreinte, insérer un identifiant correspondant à l'empreinte minimisant la distance de Hamming entre l'index considéré et les index synthétiques bornant ladite case, afin d'obtenir une table contenant des couples {identifiant minutie, identifiant individu},

   - Capturer au moins une empreinte propre à l'individu au moyen d'un capteur adapté, transformer ladite empreinte en un format numérique binaire,

   - Rechercher dans la table des index synthétiques la ou les empreintes les plus proches et identifier l'individu ou rejeter l'identification en comparant le code binaire généré aux minuties mémorisées dans la table d'index.

Pour générer une table contenant des index synthétiques, le procédé peut exécuter les étapes suivantes :

Soit h une fonction de hachage et les paramètres

*conditionArrêt1, conditionArrêt2,$\tau$,$\varepsilon$, MaxDH, min, ST, SI,*

Avec

*conditionArrêt1 et conditionArrêt2* deux « timers » de valeurs prédéfinies et choisies en fonction d'un compromis temps de calcul, précision du résultat, dans la recherche d'empreintes,

$\tau$, la probabilité de générer un bit à '1' sur un index synthétique en utilisant une distribution de Bernoulli,

$\varepsilon$, la distance entre deux index voisins d'un même centre de classe, avec $\varepsilon \in [3, 7]$,

*MaxDH* : le maximum de la distance de Hamming,

*min* : un paramètre de rejet ou seuil minimal de rejet sur le nombre de '1', nombre minimum de bits à '1' pour valider un index synthétique,

*ST* : l'ensemble des centres de classes,

*SI* : l'ensemble des index synthétiques en sortie,

*h* la taille de la fonction de hachage,

3

Initialiser

$$SI = \emptyset, ST = \emptyset, MaxDH \geq h/3, \tau \geq 1/4, \varepsilon \in \left[0; \frac{h}{10}\right], min \in \left[2; \frac{h}{5}\right],$$

Etape 1 - Créer des index cibles centres $IC_i$ de classes éloignés afin de couvrir l'espace des index,

! Tant que *conditionArrêt*1 alors :

Créer un index *i* en générant *h* bits avec une distribution de Bernoulli(r),

Si $\exists j \in ST/dH(i, j) < MaxDH|nombreMinimumDe1(i) < min$ alors rejeter l'index,

où *dH(i,j)* est la distance de Hammnig entre l'index *i* et l'index *j,* le nombre total de bits divergeant entre deux vecteurs binaires *i,*

Sinon valider l'index i comme un centre de classe {*index i centre de classe valide*} et l'ajouter à l'ensemble des centres de classes

$$ST \leftarrow ST + \{i\}$$

Fin de la boucle Si

Fin de l'étape 1

Etape 2 - Créer autour de chaque index centre de classe $IC_i$, des index proches sans chevauchement:

$\forall j \in ST$ isoler chaque centre i de ST pour construire des index $ST_j$ = {*j*}

Tant que !*conditionArrêt*2 exécuter la boucle suivante:

Créer un index *i* en générant *h* bits avec une distribution de Bernoulli($\tau$)

si $\exists j' \in \dfrac{ST_j}{dH(i,j')} \notin [\varepsilon, 2\varepsilon]|nombreMinimumDe1(i) < min$ alors rejeter l'indice i

Sinon considérer l'index *i* comme un index synthétique valide {*index synthétique final i valide*}

Mettre à jour l'ensemble des index correspondant à des intervalles autour d'un centre de classe

$$ST_j \leftarrow ST_j + \{i\}, ST_j = \text{ensemble des intervalles autour d'un centre,}$$

Fin de la boucle

Fin de tant que

Fin de l'étape 2

Générer un ensemble *SI* des index synthétiques qui comprend des centres de classes et des intervalles autour de ces centres de classes

$$\forall j, SI \leftarrow SI + ST_j.$$

La phase d'enrôlement d'un individu dans une base utilise, par exemple, les index créés dans la table d'index synthétiques et comporte les étapes suivantes :

Pour chaque empreinte digitale :

- Un calcul des gabarits binaires liés à chaque minutie à partir de la méthode MCC,
- L'obtention de plusieurs index pour chaque gabarit binaire en utilisant une fonction de hachage,
- L'insertion de l'identifiant de l'empreinte dans plusieurs cases d'une table : pour chaque index obtenu pour une empreinte, on insère dans une case l'identifiant de l'empreinte qui minimise la distance de Hamming entre l'index considéré et les index synthétiques bornant la case,
- A l'issue de cette étape, la table est complétée avec les identifiants des empreintes réelles d'individus qui constituent une base de données.

Le procédé peut aussi comporter les étapes suivantes :

Soit $T$ le gabarit, $F = \{f_{h1}, \ldots . f_{hl}\}$ un ensemble de fonctions de hachage, $l$ le nombre de fonctions de hachage, $SI$ la base de données des index synthétiques préalablement créée lors de la phase d'initialisation,
$SI \neq \emptyset$ initialisation de l'ensemble des index synthétiques,
Pour chaque minutie $m_i$ de $T$,
Pour chaque fonction de hachage $f_{hk}$ de $F$, faire

$$b = f_{hk}(m_i)$$

$$b_1 = \boldsymbol{min_1}\{dH(b, SI)\}$$

$dH$ la distance de Hamming entre b et SI

$$b_2 = \boldsymbol{min_2}\{dH(b, SI)\}$$

Enrôler $m_i$ sur $b_1$ et $b_2$ de la fonction $f_{hk}$
Finpour
Finpour $b_1$ et $b_2$ sont les bornes inférieure et supérieure de l'intervalle qui encadre l'index b calculé pour chaque minutie du gabarit à enrôler.

L'identification d'une empreinte d'un individu comporte, par exemple, les étapes suivantes :
Soit $T = gabarit\ recherché$ , $F = \{f_{h1}, \ldots . f_{hl}\}$ ; $SI$ ensemble des index synthétiques établi précédemment,

$$BD = \{T_1, \ldots\}$$

l'ensemble des gabarits contrôlés,
$LC = \{(T_k, s_k)\}$ la liste des candidats probables avec $s_k$ le score d'accumulation de chaque individu,

$$SI \neq \emptyset, LC \neq \emptyset$$

Initialiser un compteur de score $\mathbb{S}$,
Pour chaque minutie $m_i$ de $T$,
Pour chaque fonction de hachage $f_{hk}$ de $F$,
Initialiser un compteur de collisions A,

$$b = f_{hk}(m_i)$$

$$b_1 = \boldsymbol{min_1}\{dH(b, SI)\}$$

$$b_2 = \boldsymbol{min_2}\{dH(b, SI)\}$$

Les fonctions $\boldsymbol{min_1}$ et $\boldsymbol{min_2}$ calculent respectivement le premier et le deuxième minimum d'index au sens de la distance de Hamming dH entre un index en entrée et une collection d'index,

Pour chaque gabarit *t* trouvé sur les index $b_1$ et $b_2$

Pour chaque minutie j trouvée en collision sur $b_1$, $b_2$, lire la collision en comptant chaque ligne(*j*, *t*) de $b_1$, $b_2$, puis en l'ajoutant dans le compteur de collision *A,*

Compter les gabarits en collision *A[t, j]* + +//

FinPour

FinPour

FinPour

Mettre à jour la table des scores pour un gabarit *i* $\quad \mathbb{S}[t] = \mathbb{S}[t] + Max_j\{A[t, j]\}$

FinPour

Créer la liste des candidats *LC* en rangeant $\mathbb{S}$ par ordre décroissant et utiliser le candidat ayant la plus forte valeur de score pour l'étape d'identification.

La fonction de hachage est, par exemple, une fonction de hachage sensible à la similarité plus connue sous l'abréviation anglo-saxonne LSH (Locality Sensitive Hashing).

Le procédé peut aussi comporter une étape supplémentaire d'émission d'un signal d'ouverture d'un portique suite à l'identification d'un individu.

L'invention concerne aussi un système d'identification d'un individu comportant un dispositif d'acquisition d'une donnée biométrique dudit individu, relié à un dispositif de traitement de données comprenant une base de données, un processeur configuré pour exécuter les étapes du procédé selon l'invention, un dispositif de traitement du résultat d'identification, ladite base de données comprenant une table d'index synthétiques correspondant à un ensemble d'intervalles autour d'un centre de classe.

Le dispositif de traitement du résultat de l'identification est un dispositif d'affichage ou encore un dispositif générant un signal de commande d'ouverture d'un moyen d'accès à une zone.

Le dispositif d'acquisition est, par exemple, un dispositif de lecture d'empreintes et la donnée biométrique une empreinte.

D'autres caractéristiques, détails et avantages de l'invention ressortiront mieux à la lecture de la description faite en référence aux dessins annexés donnés à titre d'exemple non limitatifs et qui représentent, respectivement :

La figure 1 est une illustration d'un système d'identification utilisant le procédé selon l'invention,

La figure 2 est un schéma de principe d'identification d'un individu,

La figure 3 est une représentation des index centres de classes et des index synthétiques générés par le générateur d'index synthétique, les index sont utilisés lors de l'enrôlement et de l'indentification d'un individu,

La figure 4 représente les étapes pour l'identification d'un individu,

La figure 5 représente les étapes pour la construction d'un gabarit binaire pour une empreinte,

La figure 6 est une comparaison entre le processus de création des index pour une empreinte selon le procédé de l'art antérieur et l'utilisation des index synthétiques créés pour l'indexation des empreintes mettant en œuvre le procédé selon l'invention.

Le procédé selon l'invention utilise des gabarits représentés sous forme binaire et repose notamment sur la mise en œuvre des étapes suivantes : lors d'une première phase sur la génération d'un sous-ensemble d'index représentatifs et discriminants, qui conduit à la création d'une table d'index synthétiques (c'est l'initialisation du système). La deuxième phase consiste à enrôler une base d'empreinte digitales en exploitant la table créée à la phase d'initialisation. Et enfin la troisième phase est l'identification d'une empreinte digitale dans la base des empreintes enrôlées. Ces trois phases sont détaillées ci-après.

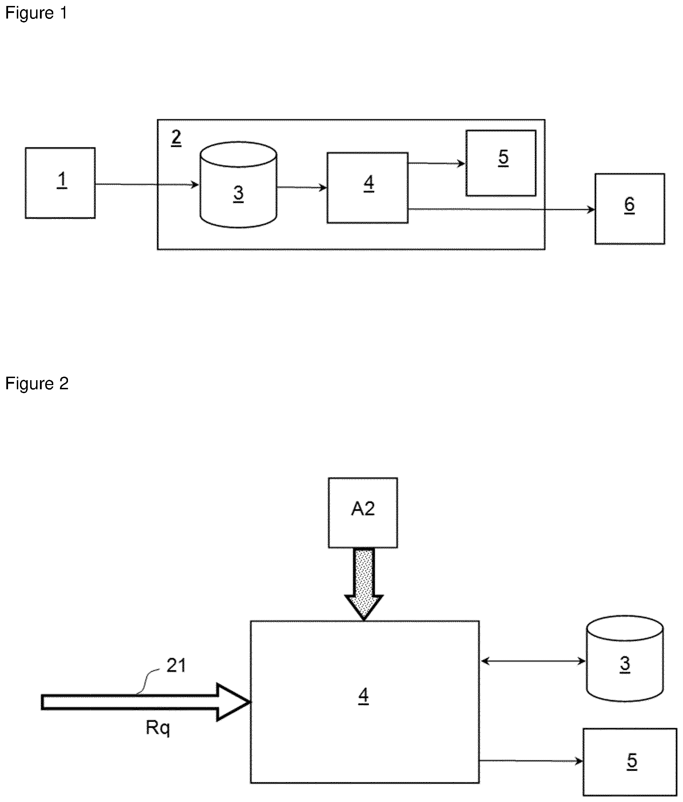

La figure 1 illustre un exemple de système d'identification pouvant mettre en œuvre le procédé selon l'invention. Un tel système comprend, par exemple, un dispositif 1 d'acquisition de données biométriques, par exemple un lecteur d'empreintes relié à un dispositif de traitement 2 des données comprenant une base de données 3 dans laquelle sont mémorisées les données biométriques, un processeur 4 pour exécuter les étapes du procédé selon l'invention, un dispositif d'affichage 5 du résultat d'identification. La base de données comprend aussi la table générée après enrôlement d'une base d'empreintes.

Une première application du procédé selon l'invention consiste, par exemple, à vérifier l'unicité d'une identité au sein d'une population, c'est-à-dire qu'un jeu de données biométriques n'est relié qu'à un seul jeu de données d'état civil au sein d'une base de données. Pour cela, on acquiert lors d'une phase d'enrôlement les données biométriques, par exemple les empreintes digitales à l'aide d'un capteur biométrique et les données d'état civil d'un individu à l'aide d'un dispositif d'acquisition adapté. Ces données sont ensuite transmises à un système d'identification biométrique qui va rechercher au sein des données biométriques présentes dans une base, des empreintes qui correspondraient aux nouvelles empreintes acquises. Si les empreintes acquises lors du procédé correspondent à des empreintes contenues dans cette base de données, l'étape suivante consistera à vérifier si « l'identité civile » enregistrée avec ces empreintes correspond à l'identité de la personne pour laquelle le système vient d'acquérir ces empreintes. Pour cela, le système comprendra un module configuré pour exécuter cette comparaison entre les données d'identité civiles et émettre un signal d'alerte, en affichant par exemple, une information de non correspondance entre les données civiles déjà présentes dans la base de données et les données civiles nouvellement enregistrées.

Le résultat de la comparaison effectuée au niveau du processeur 4 peut générer un signal de commande d'ouverture d'un portique permettant l'accès 6 à une zone protégée lorsque le résultat d'identification de la personne est positif. Le portail recevra un signal permettant son ouverture générée par le processeur si l'identification d'un individu est validée.

Le capteur d'acquisition des données biométriques peut aussi être un dispositif de lecture d'iris, lorsque les données traitées sont des caractéristiques de l'iris d'un individu. On pourra aussi utiliser une caméra configurée pour extraire des données biométriques faciales, ou encore un capteur vocal si les données permettant d'identifier l'individu sont des paramètres vocaux, des vecteurs cepstraux.

La figure 2 illustre le principe d'identification d'un individu en utilisant des index spécifiques générés lors de la phase d'initialisation du procédé selon l'invention. Cette phase d'initialisation sera exécutée avant le premier enrôlement.

Lorsque l'on souhaite identifier un individu, une requête d'identification Rq est émise. Les données biométriques acquises par le lecteur d'empreintes sont transmises, 21, au processeur 4 qui va les comparer en utilisant la base de données 3 des individus déjà enrôlés et connus par le système.

La phase d'enrôlement consiste à réaliser un enrôlement par intervalle pour les index du gabarit. Cet enrôlement par intervalle exploite les index synthétiques générés précédemment en utilisant l'algorithme de génération d'index synthétiques de la phase d'initialisation. Lors de l'enrôlement, le procédé va utiliser l'ensemble des index synthétiques générés, puis calculer les intervalles d'index synthétiques pour chacune des minuties du gabarit afin de les enrôler sur le ou les intervalles les plus proches.

La première phase d'initialisation du procédé selon l'invention comporte les étapes détaillées ci-après.

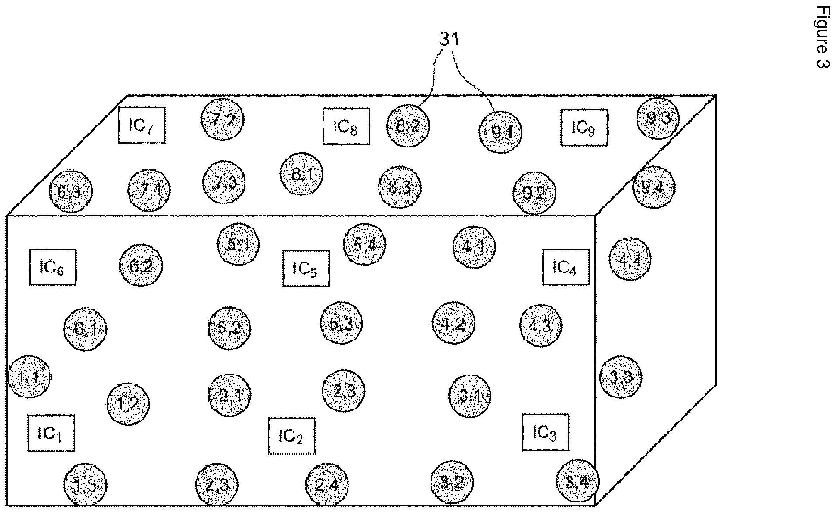

Elle comporte dans un premier temps une construction d'index éloignés les uns des autres. Ces index constituent des centres de classe représentés par des carrés $IC_i$ ($IC_1$,....$IC_g$) sur la figure 3 et qui couvrent l'espace des index possibles. Dans un deuxième temps la phase comprend une construction autour de chaque centre de classes, des intervalles d'index suffisamment proches les uns des autres, tout en évitant le chevauchement, représentés par des cercles 31 sur la figure 3. Les valeurs indiquées dans les cercles sont par exemple : (1,1), (1,2), ..., (9,4).

La première phase du procédé comporte les étapes suivantes:

Soit h une fonction de hachage et les paramètres

*conditionArrêt*1, *conditionArrêt*2,$\tau$,$\varepsilon$, *MaxDH, min, ST, SI,*

Avec

*conditionArrêt1 et conditionArrêt2* deux « timers » choisis pour stopper les boucles de recherche d'index synthétiques à ajouter, ces timers ont des valeurs prédéfinies et choisies en fonction du compromis temps de calcul, précision du résultat dans la recherche d'empreintes,

$\tau$, la probabilité de générer un bit à '1' sur un index synthétique en utilisant une distribution de Bernoulli,

$\varepsilon$, la distance entre deux index voisins d'un même centre de classe, avec $\varepsilon \in [3, 7]$,

*MaxDH* le maximum de la distance de Hamming,

*min* un paramètre de rejet ou seuil minimal de rejet sur le nombre de '1', nombre minimum de bits à '1' pour valider un index synthétique

*ST* L'ensemble des centres de classes,

*SI* l'ensemble des index synthétiques en sortie, obtenus par le procédé,

*h* La taille de la fonction de hachage (le nombre de bits fixés et sélectionnés pour le hachage par chaque fonction),

Initialiser

$$SI = \emptyset, ST = \emptyset, MaxDH \geq h/3, \tau \geq 1/4, \varepsilon \in \left[0; \frac{h}{10}\right], min \in \left[2; \frac{h}{5}\right]$$

<u>Etape 1</u>- Créer des index cibles centres de classes, IC$_i$, assez éloignés pour couvrir l'espace des index, ce qui conduit à créer un ensemble représentatif,

! Tant que *conditionArrêt*1 alors :

Créer un index *i* en générant *h* bits avec une distribution de Bernoulli($\tau$),

Si $\exists j \in ST/dH(i, j) < MaxDH|nombreMinimumDe1(i) < min$ *alors rejeter l'index,* où *dH(i, j)* est la distance de Hammnig entre l'index *i* et l'index *j,* i.e., le nombre total de bits divergeant entre deux vecteurs binaires *i,* et

Sinon valider l'index i comme un centre de classe {*index i centre de classe valide*} et l'ajouter à l'ensemble des centres de classes

$$ST \leftarrow ST + \{i\}$$

Fin de la boucle Si

Fin de l'étape 1.

Les index d'une façon générale sont des vecteurs binaires constitués de « 0 » et de « 1 ». Un index comprenant un nombre trop important de zéros ne permet pas de discriminer les éléments. Par exemple, pour obtenir un index discriminant on choisira un index comprenant au moins cinq valeurs de « 1 ».
<u>Etape 2</u> - Créer autour de chaque index centre de classe IC$_i$, des index relativement proches sans chevauchement :

$\forall j \in ST$ *isoler chaque centre i de ST pour construire des index ST$_j$ = {j}*

Tant que !*conditionArrêt2* exécuter la boucle suivante:
Créer un index *i* en générant *h* bits avec une distribution de Bernoulli($\tau$)

si

$$\exists j' \in ST_j / dH(i, j') \notin [\varepsilon, 2\varepsilon]|nombreMinimumDe1(i) < min \ alors \ rejeter \ l'indice \ i$$

Sinon considérer l'index *i* comme un index synthétique valide {*index synthétique final i valide*}

Mettre à jour l'ensemble des index correspondant à des intervalles autour d'un centre de classe

$$ST_j \leftarrow ST_j + \{i\}, ST_j = \text{ensemble des intervalles autour d'un centre,}$$

Fin de la boucle

Fin de tant que

Fin de l'étape 2

Générer un ensemble *SI* des index synthétiques qui comprend des centres de classes et des intervalles autour de ces centres de classes

$$\forall j, SI \leftarrow SI + ST_j.$$

A la fin de la phase d'initialisation, on dispose d'un ensemble d'index synthétiques.

La figure 3 est un schéma représentatif de la répartition des index synthétiques créés par l'exécution des étapes de la phase d'initialisation. Les index cibles centres de classe sont créés par l'exécution de l'étape 1 et indiqués par leur numéro, $IC_1,..., IC_9$ dans cet exemple. Sur l'espace global de recherche, une distance importante entre ces centres de classes se traduit par une grande distance de Hamming *MaxDH*. Les index synthétiques sont caractérisés par un couple (a, b), a indiquant le centre de classe de provenance et b son numéro unique dans cette classe. Chaque index synthétique est unique, il délimite l'étendue de son centre de classe et évite le chevauchement respecté par la distance de Hamming minimale *min* dans l'étape 2. L'index synthétique constitue une borne d'intervalle.

La fonction *nombreMinimumDe*1($i$) permet de compter le nombre de '1' contenus dans un index créé et utilise la variable *min* comme seuil minimal de rejet sur le nombre de '1'.

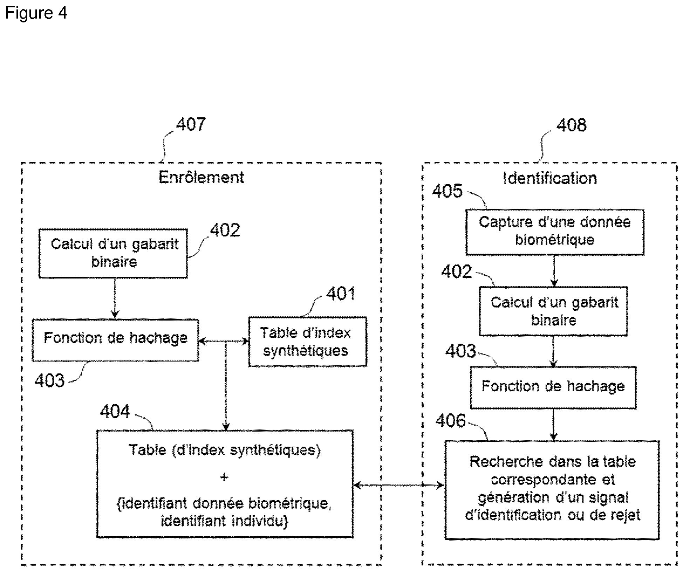

La figure 4 illustre les étapes permettant l'exploitation des index synthétiques pour réaliser l'enrôlement puis l'identification d'un individu par la suite en utilisant le procédé de l'invention.

La deuxième phase du procédé est une phase d'enrôlement d'un individu 407. Elle est réalisée en utilisant les index synthétiques 401 générés lors de la phase d'initialisation.

La phase d'enrôlement 407 va comporter pour chaque empreinte digitale :

- Un calcul des gabarits binaires liés à chaque minutie à partir de la méthode MCC, 402,

- L'obtention de plusieurs index pour chaque gabarit binaire grâce à plusieurs fonctions de hachage, par exemple la méthode LSH, 403,

- Pour chacune des minuties du gabarit on génère quelques index grâce à une technique de hachage, puis on calcule les index synthétiques les plus proches de ces index par distance de Hamming (en faisant appel à la table des index de l'initialisation 401). Ces index synthétiques sont ceux qui ont été créés à l'initialisation et représentent les bornes d'intervalles utilisés pour réaliser cette phase d'enrôlement. Pour chacune des minuties, après avoir calculé les bornes d'intervalles synthétiques, on va enrôler ces minuties sur lesdites bornes. C'est-à-dire que pour chaque index de chaque minutie, on écrit sur la borne correspondante, le numéro de la minutie ainsi que l'identifiant de l'individu (l'identifiant est soit son nom ou son matricule renseigné). On crée ainsi une table d'index représentant l'enrôlement des individus de la base. Chaque ligne de la table des index contient des couples ($m_i$,j) où $m_i$ indique le numéro de la minutie du gabarit de l'individu d'identifiant j que l'on essaye d'enrôler. Il faut noter que chaque index k de la table d'index a été créé préalablement de façon synthétique et est utilisé ici comme borne pour l'enrôlement de chacune des minuties des individus.

- A l'issue de cette étape, la table d'index est complétée avec les identifiants des empreintes réelles d'individus qui constituent la base de données, 404.

Pour réaliser l'enrôlement d'un individu, on suppose que le gabarit T est au format binaire avec, pour chaque minutie de l'empreinte digitale de l'individu, une longueur n qui peut aller jusqu'à plus de 1500 bits. On suppose également que la phase d'initialisation a déjà été exécutée au moins une fois pour initialiser le système. Le procédé va calculer pour chaque minutie de l'empreinte, les deux index synthétiques les plus proches au sens de la distance de Hamming par rapport aux index synthétiques déjà générés (lors de la phase d'initialisation). Le procédé va enrôler la minutie sur deux index synthétiques les plus proches, c'est ce que l'on appelle « enrôlement par intervalle ».

Les étapes mises en œuvre pour cet enrôlement sont les suivantes:

Soit $T$ le gabarit, $F = \{f_{h1}, \ldots f_{hl}\}$; un ensemble de fonctions de hachage, $l$ le nombre de fonctions de hachage, $SI$ la base de données des index synthétiques préalablement créée lors de la phase d'initialisation,

$SI \neq \emptyset$ initialisation de l'ensemble des index synthétiques,

Pour chaque minutie $m_i$ de $T$,

Pour chaque fonction de hachage $f_{hk}$ de $F$, faire

$$b = f_{hk}(m_i)$$

$$b_1 = \boldsymbol{min_1}\{dH(b, SI)\}\, dH$$

la distance de Hamming entre b et SI

$$b_2 = \boldsymbol{min_2}\{dH(b, SI)\}$$

Enrôler $m_i$ sur $b_1$ et $b_2$ de la fonction $f_{hk}$ en écrivant $(m_i, T)$ sur les nouvelles lignes de la table des index aux numéro $b_1$ et $b_2$

Finpour

Finpour ;

$b_1$ et $b_2$ sont les bornes inférieure et supérieure de l'intervalle qui encadre l'index $b$ calculé pour chaque minutie du gabarit à enrôler.

La troisième phase correspond à une phase d'identification d'une empreinte 408. On va rechercher dans la base d'empreintes enrôlées lors de la phase d'enrôlement 404, les empreintes les plus proches de la nouvelle empreinte acquise 405 pour l'identification.

Pour identifier un gabarit binaire (ensemble de minuties) d'un individu, le procédé va rechercher pour chaque index de chacune des minuties les deux index synthétiques les plus proches. Sur les deux index synthétiques représentant les bornes trouvées, le procédé consulte chaque ligne de la table des index et lit en comptant sur chacune d'elle les minuties ainsi que les identifiants de gabarits correspondants et précédemment enrôlés. Le procédé va donc incrémenter une table de score correspondant au score de similarité de chaque gabarit retrouvé sur les bornes synthétiques de lecture.

La première partie est une étape d'extraction correspondant à une capture d'une donnée biométrique 405, puis un calcul de gabarit binaire 402. La deuxième partie va lire et compter un ensemble de collisions pour les gabarits qui appartiennent aux mêmes index synthétiques pour chacune des fonctions de hachage en exploitant le résultat de la fonction de hachage 403, la recherche dans la base des empreintes enrôlées 406 et dans la table des index synthétiques 404.

L'étape d'identification se fait en deux étapes que sont l'extraction du gabarit binaire (capture biométrique 405 et calcul de gabarit binaire 402) puis l'identification elle-même ensuite. Dans la première partie, le procédé va extraire le gabarit binaire correspondant, 402. Dans la deuxième partie de l'identification, le procédé va compter le score de similarité relatif à chaque minutie au travers de chacune des fonctions de hachage. C'est le score de similarité exprimé précédemment. Il est aussi appelé collision dans la description de l'algorithme. Lire une collision consiste pour une minutie, après avoir trouvé les index synthétiques représentant les bornes, à compter toutes les minuties des gabarits précédemment enrôlés afin d'incrémenter la table des scores. La collision est lue par l'étape 403 suivie de l'étape de recherche dans la table de correspondance et la génération d'un signal 406 et enfin les scores de collisions comptés par cette étape 406 dans l'étape de recherche dans la table des empreintes 404.

Les étapes de la troisième phase sont alors les suivantes :

Soit $T$ = *gabarit recherché*, $F = \{f_{h1}, \ldots f_{hl}\}$; $SI$ ensemble des index synthétiques établi précédemment

$BD = \{T_1, \ldots\}$ l'ensemble des gabarits déjà enrôlés précédemment et à contrôler ; Base de données entière

$LC = \{(T_k, s_k)\}$ la liste des candidats probables où $T_k$ est l'identifiant du candidat et $s_k$ le score de similarité trouvé pour ce candidat de chaque individu,

$$SI \neq \emptyset, LC \neq \emptyset$$

Initialiser un compteur de score $\mathbb{S}$,

Pour chaque minutie $m_i$ *de T*

Pour chaque fonction de hachage $f_{hk}$ *de F*

Initialiser un compteur de collisions A

$$b = f_{hk}(m_i)$$

$$b_1 = \boldsymbol{min_1}\{dH(b, SI)\}$$

$$b_2 = \boldsymbol{min_2}\{dH(b, SI)\}$$

Pour chaque gabarit *t* trouvé sur les index $b_1$ et $b_2$

Pour chaque minutie j trouvée en collision sur $b_1$, $b_2$, lire la collision en comptant chaque ligne(*j*, *t*) de $b_1$, $b_2$, puis en ajoutant la collision dans le compteur de collision *A*.

Compter les gabarits en collision *A[t, j]* + +//

FinPour

FinPour

FinPour

Mettre à jour la table des scores pour un gabarit $t$   $\mathbb{S}[t] = \mathbb{S}[t] + Max_j\{A[t, j]\}$

FinPour

Créer la liste des candidats *LC* en rangeant $\mathbb{S}$ par ordre décroissant. Les scores les plus grands sont les candidats les plus probables.

Le compteur est, par exemple, une matrice accumulateur de score. Il est initialisé pour conserver le score total à la fin. La recherche d'un gabarit se fait minutie par minutie. Pour chaque minutie, le score est connu par la matrice accumulateur A, puis reversé en fin de boucle de la minutie dans S pour conserver le résultat final. Cet accumulateur est mis à jour pour chaque minutie parcourue.

Les fonctions $\boldsymbol{min_1}$ et $\boldsymbol{min_2}$ calculent respectivement le premier et le deuxième minimum d'index au sens de la distance de Hamming dH entre un index en entrée et une collection d'index. La liste des candidats *LC* par ordre décroissant permet de retrouver le candidat le plus proche en tête du tableau de recherche.

A l'issue de cette étape, le processeur va émettre un signal d'identification ou de refus d'identification d'un individu. Le signal peut se traduire par un affichage du résultat d'identification sur l'écran du dispositif d'affichage 7. Il peut aussi prendre la forme d'un signal d'une commande qui commande un portillon d'accès à une zone ou un site, 406.

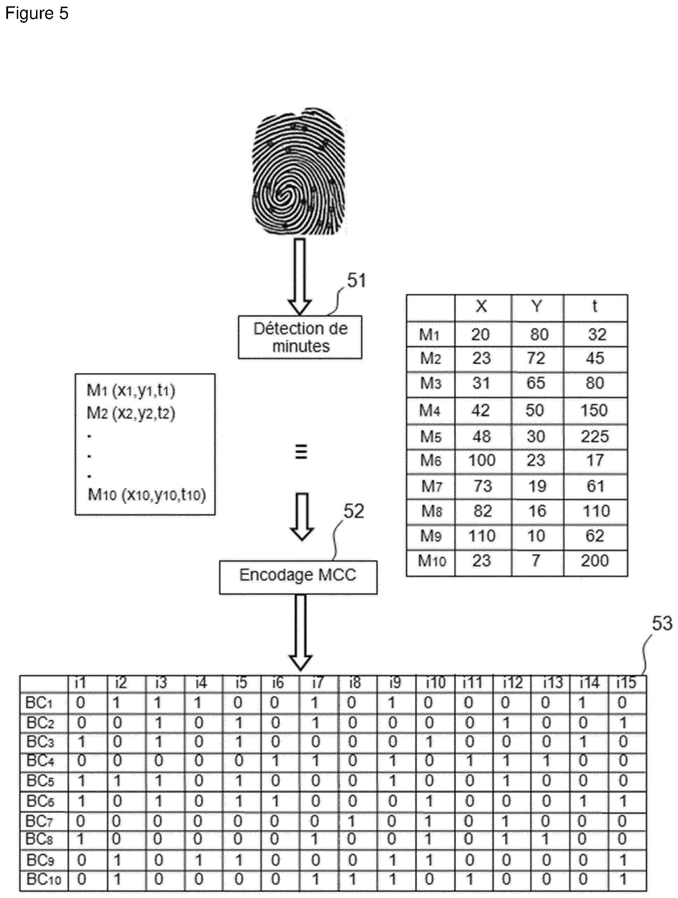

La figure 5 présente la première étape du processus d'indexation ; c'est l'extraction des descripteurs de l'empreinte. Elle a pour but de transformer une image d'empreinte en un format numérique binaire. Ainsi, la phase 51 consiste à extraire les différentes minuties $M_i(x_i, y_i, t_i)$ caractérisées par leurs coordonnées x, y et t leur orientation, dix minuties $M_1, .., M_{10}$, dans l'exemple. Ensuite la phase 52 est la création d'un template binaire MCC. Chaque minutie $M_i$ est représentée sous forme d'un code binaire $BC_1, BC_2,..., BC_{10}$, (10100101), 53. En pratique le vecteur binaire d'une minutie de l'empreinte est long (jusqu'à plus de 1500 bits).

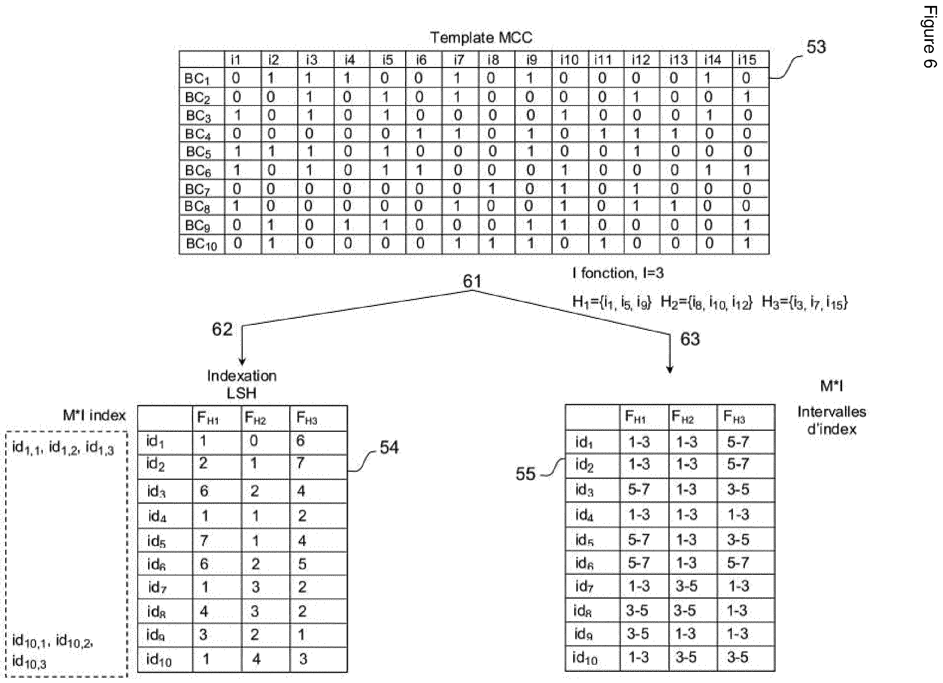

La deuxième étape illustrée en figure 6 consiste donc à l'indexation du template MCC, 43. On utilise ensuite plusieurs fonctions de hachage fixes, 51, qui sont des suites de bits placés à des positions fixes pour toutes les minuties binaires. Ceci permet de représenter une minutie par un sous-ensemble de bits fixés par chacune de ces fonctions, par exemple trois fonctions de hachage $H_1$, $H_2$, et $H_3$. Les bits $i_1$, $i_5$ et $i_9$ sont ceux choisis pour la fonction $H_1$. Comme chaque fonction de hachage utilise trois bits dans le cadre de cet exemple, l'intervalle $[0 ; (2^3-1)]$ soit $[0 ; 7]$ est l'espace total des index pour chaque fonction de hachage. On va ensuite soumettre chaque minutie par les fonctions de hachage afin d'indexer l'empreinte digitale. L'indexation de l'empreinte est faite en créant un index pour chacune des minuties qui la constituent. $id_{1,1}$ correspond à l'index lié à la minutie $id_1$ et la fonction de hachage $f_{H1}$, soit la valeur 1 dans le tableau, $id_{1,1}$ correspond à l'index lié à la minutie $id_2$ et la fonction de hachage $f_{H2}$, soit la valeur 0 dans le tableau, et ainsi de suite pour tous les index.

Deux cas d'indexation sont représentés en utilisant les fonctions de hachage. Le cas 62 est l'indexation classique de la méthode MCC existant dans l'état de l'art et le cas 63 présente l'indexation selon l'invention.

Dans la méthode 62, MCC classique, après avoir passé chaque code binaire de la minutie à travers chacune des fonctions de hachage, on obtient M*I intervalles d'index possibles représentés sur l'intervalle des index possibles pour chaque fonction. Dans l'exemple, on obtient au total trente index pour l'empreinte représentée dans la table des index. Il faut noter que pour chacune des fonctions de hachage, les index sont représentés sur l'intervalle $[0; 7]$ dans la table des index.

La partie 63 illustre le procédé d'indexation des minuties de l'empreinte selon l'invention. Dans un premier temps l'espace des index possibles est contrôlé. Le procédé crée un ensemble d'index fixes sur l'espace des index possibles. Ces index sont fixes et constituent les bornes de représentation des index de l'empreinte digitale. En effet, aucun autre index supplémentaire ne pourra être créé par une minutie. Dans l'exemple, on choisit les index 1, 3, 5, 7 (générés normalement par l'algorithme de création d'index synthétique) comme synthétiques et fixes pour les différentes fonctions de hachage. Ainsi, après avoir passé chaque minutie au travers des trois fonctions de hachage, on calcule les deux distances de Hamming les plus proches entre la minutie à indexer et les index synthétiques créés.

On indexe la minutie sur les deux bornes les plus proches (indexation par intervalle). Ceci permet de contrôler la table des index sur la plage globale possible ; de généraliser la création des index pour chacune des minuties binaires ; de réduire les pertes d'informations en cas de changement de valeur d'un bit et de maximiser la précision de l'identification de l'empreinte.

En effet, dans le procédé selon l'art antérieur 62, la table 64 des index s'agrandit au fur et à mesure qu'un nouvel index possible est généré pour une empreinte par une fonction de hachage. Par exemple, pour la fonction $H_3$, l'index 1 est uniquement créé pour la minutie 9 ($id_9$ dans la table des index). Il est donc impossible de prédire ou prévoir une taille fixe de la table d'index. On a donc un grand nombre d'index possibles à parcourir sur la table des index et surtout, des index très peu remplis. C'est pourquoi, dans le procédé selon l'invention 63, le nombre d'intervalles d'index est fixe et la taille de la table des index est totalement maîtrisée. Ceci va permettre d'accélérer le processus d'indexation.

De même, dans 63 selon l'invention, on n'indexe pas sur la valeur exacte produite par une minutie contrairement à la partie 62 selon l'art antérieur. Sur deux échantillons d'une même empreinte digitale acquise à deux instants différents, les minuties ne sont pas absolument identiques bit à bit. 1, 2,3... ou plusieurs bits peuvent être différents selon les conditions d'acquisition. L'art antérieur ne permet pas un tel contrôle et si un bit change, l'index généré n'est pas identique pour les deux minuties des deux échantillons d'empreinte. Lorsqu'un bit varie, alors l'indexation de la minutie exacte change, cependant, l'index reste valide sur le même intervalle, 65. Le procédé permet ainsi de conserver l'indexation par intervalle. Le procédé selon l'invention augmente le taux de précision en contrôlant la perte d'informations liée aux variations des bits.

L'exemple a été donné pour un procédé d'identification utilisant les empreintes digitales. Sans sortir du cadre de l'invention, les étapes décrites précédemment s'appliquent pour l'identification d'un individu à partir de l'iris, ou de tout autre caractéristique biométrique d'un individu, en considérant à la place de la minutie utilisée pour l'empreinte digitale une particularité du paramètre biométrique utilisé, tel que l'iris, ou d'un paramètre morphologique. L'homme du métier adaptera les méthodes de calcul de gabarit à chaque application, par exemple, dans le cas d'une identification à partir de l'iris, un homme du métier utilisera un algorithme de Daugmant pour générer un code binaire associé à l'iris.

Le procédé selon l'invention présente notamment les avantages suivants: l'utilisation d'une table d'indexation avec un nombre d'entrées réduit, une génération synthétique des index qui permet d'assurer un caractère discriminant et représentative des index de la table. Le procédé permet d'améliorer les performances de traitement en termes de vitesse et de précision par rapport à la méthode d'indexation MCC, donc une reconnaissance plus rapide d'un individu.

**Revendications**

**1.** Procédé d'identification d'un individu à partir d'informations contenues dans une base de données **caractérisé en ce**

**qu'**il comporte au moins les étapes suivantes :

- Générer ou utiliser une table contenant des index synthétiques correspondant à un ensemble d'intervalles autour d'un centre de classe, (401),
- Enrôler plusieurs données biométriques (407) en exécutant les étapes suivantes :

- Pour chaque donnée biométrique, calculer un gabarit binaire lié à chaque paramètre caractéristique d'une donnée biométrique, (402),
- Utiliser une méthode de hachage afin d'obtenir plusieurs index pour chaque gabarit binaire, (403),
- Pour chaque index obtenu pour une donnée biométrique, insérer un identifiant correspondant à la donnée biométrique minimisant la distance de Hamming entre l'index considéré et les index synthétiques bornant une case, afin d'obtenir une table contenant des couples {identifiant donnée biométrique, identifiant individu}, (404),
- Capturer au moins une donnée biométrique propre à l'individu au moyen d'un capteur adapté et calculer un gabarit binaire, (402, 405),
- Rechercher (408) dans la table la ou les données biométriques les plus proches, comparer la donnée biométrique capturée aux données biométriques de la base, générer un résultat d'identification en cas de correspondance entre lesdites données comparées ou de non identification de l'individu, (404, 406) et traiter le résultat obtenu.

2. Procédé d'identification selon la revendication 1 **caractérisé en ce que** l'on utilise les empreintes digitales pour identifier un individu et on exécute les étapes suivantes :

- Enrôler plusieurs empreintes en exécutant les étapes suivantes :

- Pour chaque empreinte, calculer un gabarit binaire lié à chaque minutie d'une empreinte en utilisant une méthode par code cylindrique de minuties MCC,
- Utiliser une méthode de hachage afin d'obtenir plusieurs index pour chaque gabarit binaire,
- Pour chaque index obtenu pour une empreinte, insérer un identifiant correspondant à l'empreinte minimisant la distance de Hamming entre l'index considéré et les index synthétiques bornant ladite case, afin d'obtenir une table contenant des couples, {identifiant minutie, identifiant individu},
- Capturer au moins une empreinte propre à l'individu au moyen d'un capteur adapté, transformer ladite empreinte en un format numérique binaire,
- Rechercher dans la table la ou les empreintes les plus proches et identifier l'individu ou rejeter l'identification en comparant le code binaire généré aux minuties mémorisées dans la table d'index.

3. Procédé selon l'une des revendications 1 ou 2 **caractérisé en ce que** pour générer une table contenant des index synthétiques, on exécute les étapes suivantes :

Soit h une fonction de hachage et les paramètres
*conditionArrêt*1, *conditionArrêt*2, $\tau, \varepsilon$, *MaxDH, min, ST, SI,*
Avec
*conditionArrêt1 et conditionArrêt2* deux « timers » de valeurs prédéfinies et choisies en fonction d'un compromis temps de calcul, précision du résultat, dans la recherche d'empreintes,
$\tau$, la probabilité de générer un bit à '1' sur un index synthétique en utilisant une distribution de Bernoulli,
$\varepsilon$, la distance entre deux index voisins d'un même centre de classe, avec $\varepsilon \in$ [3, 7],
*MaxDH* : le maximum de la distance de Hamming,
*min* : un paramètre de rejet ou seuil minimal de rejet sur le nombre de '1',
nombre minimum de bits à '1' pour valider un index synthétique,
*ST* : l'ensemble des centres de classes,
*SI* : l'ensemble des index synthétiques en sortie,
*h* la taille de la fonction de hachage,
Initialiser

$$SI = \emptyset, ST = \emptyset, MaxDH \geq h/3, \tau \geq 1/4, \varepsilon \in \left[0; \frac{h}{10}\right], min \in \left[2; \frac{h}{5}\right],$$

Etape 1- Créer des index cibles centres $IC_i$ de classes éloignés afin de couvrir l'espace des index,
Tant que le paramètre *conditionArrêt*1 n'est pas atteint :

Créer un index *i* en générant *h* bits avec une distribution de Bernoulli ($\tau$),
Si

$$\exists j \in ST / dH(i,j) < MaxDH | nombreMinimumDe1(i) <$$

*min alors rejeter l'index,* où *dH(i, j)* est la distance de Hammnig entre l'index *i* et l'index *j*, le nombre total de bits divergeant entre deux vecteurs binaires *i*,
Sinon valider l'index i comme un centre de classe {*index i centre de classe valide*} et l'ajouter à l'ensemble des centres de classes $ST \leftarrow ST + \{i\}$
Etape 2 - Créer autour de chaque index centre de classe $IC_i$, des index proches sans chevauchement:

*quelque soit j appartenant à l'ensembledes centres de classe ST*
*isoler chaque centre i de ST pour construire des index $ST_j$ = {j}*

Tant que la valeur du paramètre *conditionArrêt*2 n'est pas atteinte exécuter les étapes suivantes:

Créer un index *i* en générant *h* bits avec une distribution de Bernoulli($\tau$)
si

$$\exists j' \in ST_j \ tel \ que \ dH(i,j') \notin [\varepsilon, 2\varepsilon] | nombreMinimumDe1(i) <$$

*min alors rejeter l'indice i*
Sinon considérer l'index *i* comme un index synthétique valide {*index synthétique final i valide*}
Mettre à jour l'ensemble des index correspondant à des intervalles autour d'un centre de classe

$$ST_j \leftarrow ST_j + \{i\}, \ ST_j = \text{ensemble des intervalles autour d'un centre,}$$

Générer un ensemble *SI* des index synthétiques qui comprend des centres de classes et des intervalles autour de ces centres de classes en ajoutant les valeurs $ST_j$ à l'ensemble *SI* pour toutes les valeurs de j.

4. Procédé selon la revendication 2 **caractérisé en ce que** la phase d'enrôlement d'un individu dans une base utilise les index créés dans la table d'index synthétiques et comporte les étapes suivantes :
Pour chaque empreinte digitale :

- Un calcul des gabarits binaires liés à chaque minutie à partir de la méthode MCC,
- L'obtention de plusieurs index pour chaque gabarit binaire en utilisant une fonction de hachage,
- L'insertion de l'identifiant de l'empreinte dans plusieurs cases d'une table :
pour chaque index obtenu pour une empreinte, on insère dans une case l'identifiant de l'empreinte qui minimise la distance de Hamming entre l'index considéré et les index synthétiques bornant la case,
- A l'issue de cette étape, la table est complétée avec les identifiants des empreintes réelles d'individus qui constituent une base de données.

5. Procédé selon la revendication 4 **caractérisé en ce qu'**il comporte les étapes suivantes :

Soit *T* le gabarit, *F* = {$f_{h1}, \dots f_{hl}$}; un ensemble de fonctions de hachage, *l* le nombre de fonctions de hachage, *SI* la base de données des index synthétiques préalablement créée lors de la phase d'initialisation,
*SI* ≠ Ø initialisation de l'ensemble des index synthétiques,
Pour chaque minutie $m_i$ *de T,*
Pour chaque fonction de hachage $f_{hk}$ *de F,* calculer

$$b = f_{hk}(m_i)$$

$$b_1 = \boldsymbol{min_1}\{dH(b, SI)\}\, dH$$

la distance de Hamming entre b et SI

$$b_2 = \boldsymbol{min_2}\{dH(b, SI)\}$$

Enrôler $m_i$ sur $b_1$ et $b_2$ de la fonction $f_{hk}$
$b_1$ et $b_2$ sont les bornes inférieure et supérieure de l'intervalle qui encadre l'index b calculé pour chaque minutie du gabarit à enrôler.

6. Procédé selon l'une des revendications 2 et 4 à 5 **caractérisé en ce que** l'identification d'une empreinte d'un individu comporte les étapes suivantes :
Soit *Tun gabarit recherché* , F = {$f_{n1}$, ... . $f_{hl}$} ; *SI* l'ensemble des index synthétiques établi précédemment,

$$BD = \{T_1, ...\}$$

l'ensemble des gabarits contrôlés,

$LC = \{(T_k, s_k)\}$ la liste des candidats probables avec $s_k$ le score d'accumulation de chaque individu,
Initialiser l'ensemble des index synthétiques établi précédemment et la liste des candidats probables à la valeur zéro
Initialiser un compteur de score $\mathbb{S}$,
Pour chaque minutie $m_i$ *de T,*
Pour chaque fonction de hachage $f_{hk}$ *de F,*
Initialiser un compteur de collisions *A*, calculer

$$b = f_{hk}(m_i)$$

$$b_1 = \boldsymbol{min_1}\{dH(b, SI)\}$$

$$b_2 = \boldsymbol{min_2}\{dH(b, SI)\}$$

Les fonctions $\boldsymbol{min_1}$ et $\boldsymbol{min_2}$ calculent respectivement le premier et le deuxième minimum d'index au sens de la distance de Hamming dH entre un index en entrée et une collection d'index,
Pour chaque gabarit *t* trouvé sur les index $b_1$ et $b_2$
Pour chaque minutie j trouvée en collision sur $b_1$ , $b_2$ , lire la collision en comptant chaque ligne(*j*, *t*) de $b_1$, $b_2$, puis en le renseignant dans le compteur de collision *A*
Compter les gabarits en collision

Mettre à jour la table des scores pour un gabarit *i,* $\mathbb{S}[t] = \mathbb{S}[t] + Max_j\{A[t, j]\}$ avec$Max_j\{A[t, j]\}$ *la valeur maximale de la somme des gabarits en collision.*
Créer la liste des candidats *LC* en rangeant $\mathbb{S}$ par ordre décroissant et utiliser le candidat ayant la plus forte valeur de score pour l'étape d'identification.

7. Procédé selon l'une des revendications précédentes **caractérisé en ce que** la fonction de hachage est une fonction LSH.

8. Procédé selon l'une des revendications précédentes **caractérisé en ce qu'**il comporte une étape supplémentaire d'émission d'un signal d'ouverture d'un portique suite à l'identification d'un individu.

9. Système d'identification d'un individu comportant un dispositif d'acquisition d'une donnée biométrique dudit individu, relié à un dispositif de traitement de données (2) comprenant une base de données (3), un processeur (4) configuré pour exécuter les étapes du procédé selon l'une des revendications 1 à 8, un dispositif de traitement du résultat d'identification, ladite base de données (3) comprenant la table d'index synthétiques correspondant à un ensemble d'intervalles autour d'un centre de classe.

10. Système selon la revendication 9 **caractérisé en ce que** le dispositif de traitement du résultat de l'identification est un dispositif d'affichage (5).

11. Système selon la revendication 9 **caractérisé en ce que** le dispositif de traitement du résultat de l'identification est un dispositif générant un signal de commande d'ouverture d'un moyen d'accès à une zone.

12. Système selon l'une des revendications 10 et 11 **caractérisé en ce que** le dispositif d'acquisition est un dispositif de lecture d'empreintes et la donnée biométrique une empreinte.

**Patentansprüche**

1. Verfahren zum Identifizieren einer Person auf der Basis von in einer Datenbank enthaltenen Informationen, **dadurch gekennzeichnet, dass** es mindestens die folgenden Schritte beinhaltet:

- Erzeugen oder Verwenden einer Tabelle mit synthetischen Indizes, die einem Satz von Intervallen um eine Klassenmitte herum entsprechen, (401),
- Registrieren mehrerer biometrischer Daten (407) durch Ausführen der folgenden Schritte:

- Berechnen, für jedes biometrische Datenelement, einer binären Schablone, die mit jedem charakteristischen Parameter eines biometrischen Datenelements verknüpft ist, (402),
- Verwenden einer Hash-Methode, um mehrere Indizes für jede binäre Schablone zu erhalten, (403),
- Einfügen, für jeden für ein biometrisches Datenelement erhaltenen Index, einer Kennung entsprechend dem biometrischen Datenelement, die die Hamming-Distanz zwischen dem betrachteten Index und den ein Feld begrenzenden synthetischen Indizes minimiert, um eine Tabelle zu erhalten, die Paare {Biometrisches-Datenelement-Kennung, Personenkennung} enthält, (404),
- Aufnehmen mindestens eines der Person eigenen biometrischen Datenelements mittels eines geeigneten Sensors und Berechnen einer binären Schablone, (402, 405),
- Durchsuchen (408) der Tabelle nach den ein oder mehreren nächstliegenden biometrischen Datenelementen, Vergleichen des aufgenommenen biometrischen Datenelements mit den biometrischen Datenelementen in der Datenbank, Erzeugen eines Identifikationsergebnisses im Fall einer Übereinstimmung zwischen den genannten verglichenen Daten oder einer Nicht-Identifikation der Person, (404, 406), und Verarbeiten des erhaltenen Ergebnisses.

2. Identifikationsverfahren nach Anspruch 1, **dadurch gekennzeichnet, dass** Fingerabdrücke zum Identifizieren einer Person verwendet und die folgenden Schritte ausgeführt werden:

- Registrieren mehrerer Fingerabdrücke durch Ausführen der folgenden Schritte:

- Berechnen, für jeden Fingerabdruck, einer binären Schablone, die mit jeder Minutie eines Fingerabdrucks verknüpft ist, unter Anwendung einer Minutien-Zylinder-Code-Methode MCC,
- Verwenden einer Hash-Methode, um mehrere Indizes für jede binäre Schablone zu erhalten,
- Einfügen, für jeden für einen Fingerabdruck erhaltenen Index, einer Kennung entsprechend dem Fingerabdruck, die die Hamming-Distanz zwischen dem betrachteten Index und den das genannte Feld begrenzenden synthetischen Indizes minimiert, um eine Tabelle zu erhalten, die Paare {Minutienkennung, Personenkennung} enthält,
- Aufnehmen mindestens eines der Person eigenen Fingerabdrucks mittels eines geeigneten Sensors, Umwandeln des genannten Fingerabdrucks in ein binäres digitales Format,
- Durchsuchen der Tabelle nach den ein oder mehreren nächstliegenden Fingerabdrücken und Identifizieren der Person oder Zurückweisen der Identifizierung durch Vergleichen des erzeugten Binärcode mit den in der Indextabelle gespeicherten Minutien.

3. Verfahren nach Anspruch 1 oder 2, **dadurch gekennzeichnet, dass** zum Erzeugen einer synthetische Indizes enthaltenden Tabelle die folgenden Schritte ausgeführt werden:

Es sei *h* eine Hash-Funktion und die Parameter
*Stopp-Bedingung*1*, Stopp-Bedingung*2*,τ,ε, MaxHD, min, ST, SI,*
wobei
*Stopp-Bedingung1 und Stopp-Bedingung2* zwei "Timer" mit vordefinierten Werten sind,
ausgewählt als Kompromiss zwischen Rechenzeit und Genauigkeit des Ergebnisses bei der Fingerabdruck-
suche,
$\tau$ die Wahrscheinlichkeit der Erzeugung eines Bits bei '1' auf einem synthetischen Index unter Verwendung einer
Bernoulli-Verteilung ist,
$\varepsilon$ der Abstand zwischen zwei benachbarten Indizes derselben Klassenmitte ist, wobei $\varepsilon \in [3, 7]$ ist,
*MaxHD* das Maximum der Hamming-Distanz ist,
*min* ein Rückweisungsparameter oder minimaler Rückweisungsschwellenwert bei der Anzahl '1', der minimalen
Anzahl von Bits bei '1', ist, um einen synthetischen Index zu validieren,
*ST* der Satz der Klassenmitten ist,
*SI* der Satz der synthetischen Indizes am Ausgang ist,
h die Größe der Hash-Funktion ist,
Initialisieren

$$SI = \emptyset, ST = \emptyset, MaxHD \geq h/3, \tau \geq 1/4, \varepsilon \in \left[0; \frac{h}{10}\right], min \in \left[2; \frac{h}{5}\right],$$

<u>Schritt 1</u> - Erstellen von Zielklassenmitten-Indizes $IC_i$, die weit voneinander entfernt sind,
um den Indexraum abzudecken,
solange der Parameter *Stopp-Begingung*1 nicht erreicht ist:

Erstellen eines Index *i* durch Erzeugen von *h* Bits mit einer Bernoulli-Verteilung ($\tau$),
wenn

$$\exists j \in ST/HD\ (i, j) < MaxHD | MindestanzahlVon 1(i) <$$

*min, dann den Index verwerfen,* wobei *HD(i, j)* die Hamming-Distanz zwischen Index *i* und Index *j* ist,
wobei die Gesamtzahl der Bits zwischen zwei Binärvektoren *i* divergiert,
andernfalls Validieren von Index i als Klassenmitte {*gültiger Klassenmitten-Index*} und Hinzufügen
desselben zum Satz der Klassenmitten $ST \leftarrow ST + \{i\}$,
<u>Schritt 2</u> - Erstellen um jeden Klassenmitten-Index $IC_i$ herum naher, nicht überlappender Indizes:

*je nachdem, welcher j zu dem Satz der Klassenmitten ST gehört*
*Isolieren jeder Mitte i von ST, um Indizes $ST_j = \{j\}$ zu konstruieren*

solange der Wert des Parameters *Stopp-Bedingung2* nicht erreicht ist, Ausführen der folgenden
Schritte:
Erstellen eines Index *i* durch Erzeugen von *h* Bits mit einer Bernoulli-Verteilung ($\tau$) wenn

$$\exists j' \in ST_j, so\ dass\ HD\ (i, j') \notin [\varepsilon, 2\varepsilon] | MindestanzahlVon1(i) <$$

*min dann der Index i verwerfen*
andernfalls Betrachten des Index *i* als gültigen synthetischen Index {*gültiger letzter syntheti-*
*scher Index i*}
Aktualisieren des Satzes der Indizes, die Intervallen um eine Klassenmitte herum entsprechen

$$ST_j \leftarrow ST_j + \{i\}, ST_j = \text{Satz der Intervalle um einen Mittelpunkt herum,}$$

Erzeugen eines Satzes *SI* der synthetischen Indizes, die Klassenmitten und Intervalle um diese
Klassenmitten herum enthält, durch Hinzufügen der Werte $ST_j$ für alle Werte von j zu dem Satz
*SI.*

4. Verfahren nach Anspruch 2, **dadurch gekennzeichnet, dass** die Phase des Registrierens einer Person in einer Datenbank die in der synthetischen Indextabelle erstellten Indizes verwendet und die folgenden Schritte beinhaltet: für jeden Fingerabdruck:

- Berechnen der binären Schablonen, die mit jeder Minutie verknüpft sind, auf der Basis der MCC-Methode,
- Erhalten mehrerer Indizes für jede binäre Schablone unter Verwendung einer Hash-Funktion,
- Einfügen der Kennung des Fingerabdrucks in mehrere Felder einer Tabelle: Für jeden für einen Fingerabdruck erhaltenen Index Einfügen der Kennung des Fingerabdrucks, die die Hamming-Distanz zwischen dem betrachteten Index und den das Feld begrenzenden synthetischen Indizes minimiert, in ein Feld,
- Ausfüllen, am Ende dieses Schritts, der Tabelle mit den Kennungen der tatsächlichen Fingerabdrücke von Personen, die eine Datenbank bilden.

5. Verfahren nach Anspruch 4, **dadurch gekennzeichnet, dass** es die folgenden Schritte beinhaltet:

es sei $T$ die Schablone, $F = \{f_{h1},..., f_{hl}\}$, ein Satz von Hash-Funktionen, $l$ die Anzahl der Hash-Funktionen, $SI$ die Datenbank der synthetischen Indizes, die zuvor in der Initialisierungsphase erstellt wurde,
$SI \neq \emptyset$ Initialisieren des Satzes der synthetischen Indizes,
für jede Minutie $m_i$ von $T$,
Berechnen, für jede Hash-Funktion $f_{hk}$ von $F$,

$$b = f_{hk}(m_i)$$

$$b_1 = \mathbf{min_1}\{HD(b,SI)\}\ HD$$

die Hamming-Distanz zwischen b und SI

$$b_2 = \mathbf{min_2}\{HD(b,SI)\}$$

Registrieren von $m_i$ auf $b_1$ und $b_2$ der Funktion $f_{hk}$,
$b_1$ und $b_2$ sind die Unter- und Obergrenze des Intervalls, das den Index $b$ einrahmt, der für jede Minutie der zu registrierenden Schablone berechnet wurde.

6. Verfahren nach einem der Ansprüche 2 und 4 bis 5, **dadurch gekennzeichnet, dass** die Identifizierung eines Fingerabdrucks einer Person die folgenden Schritte beinhaltet:

es sei $T$ eine gesuchte Schablone, $F = \{f_{h1},..., f_{hl}\}$; $SI$ der zuvor erstellte Satz der synthetischen Indizes,
$BD = \{T_1,...\}$ der Satz der geprüften Schablonen,
$LC = \{(T_k, s_k)\}$ die Liste der wahrscheinlichen Kandidaten, wobei $s_k$ die Akkumulationspunktzahl jeder Person ist,
Initialisieren des Satzes von zuvor erstellten synthetischen Indizes und der Liste der wahrscheinlichen Kandidaten mit dem Wert Null
Initialisieren eines Punktestandzählers $\mathbb{S}$,
für jede Minutie $m_i$ von $T$,
für jede Hash-Funktion $f_{hk}$ von $F$,
Initialisieren eines Kollisionszählers $A$, Berechnen

$$b = f_{hk}(m_i)$$

$$b_1 = \mathbf{min_1}\{HD(b,SI)\}$$

$$b_2 = \mathbf{min_2}\{HD(b,SI)\}$$

die Funktionen $\mathbf{min_1}$ und $\mathbf{min_2}$ berechnen das erste bzw. das zweite Indexminimum im Sinne der Hamming-Distanz HD zwischen einem Index am Eingang und einer Indexsammlung,
für jede auf den Indizes $b_1$ und $b_2$ gefundene Schablone $t$
für jede auf $b_1$, $b_2$ kollidierende Minutie j Lesen der Kollision durch Zählen jeder Zeile$(j, t)$ von $b_1$, $b_2$ und dann

Eintragen in den Kollisionszähler*A*
Zählen der kollidierenden Schablonen

Aktualisieren der Punktzahltabelle für eine Schablone *i,* $\mathbb{S}[t] = \mathbb{S}[t] + Max_j\{A[t, j]\}$ , wobei *Max*$_j${*A[t, j]*} *der Höchstwert der Summe der kollidierenden Schablonen* ist,
Erstellen der Liste der Kandidaten *LC* durch Anordnen von $\mathbb{S}$ in absteigender Reihenfolge und Verwenden des Kandidaten mit der höchsten Punktzahl für den Identifikationsschritt.

7. Verfahren nach einem der vorherigen Ansprüche, **dadurch gekennzeichnet, dass** die Hash-Funktion eine LSH-Funktion ist.

8. Verfahren nach einem der vorherigen Ansprüche, **dadurch gekennzeichnet, dass** es einen zusätzlichen Schritt des Sendens eines Signals zum Öffnen eines Portals nach der Identifizierung einer Person beinhaltet.

9. System zum Identifizieren einer Person mit einem Gerät zur Erfassung eines biometrischen Datenelements der genannten Person, das mit einem Datenverarbeitungsgerät (2) verbunden ist, das eine Datenbank (3), einen zum Ausführen der Schritte des Verfahrens nach einem der Ansprüche 1 bis 8 konfigurierten Prozessor (4) und ein Gerät zum Verarbeiten des Identifizierungsergebnisses umfasst, wobei die genannte Datenbank (3) die Tabelle synthetischer Indizes umfasst, die einem Satz von Intervallen um eine Klassenmitte herum entsprechen.

10. System nach Anspruch 9, **dadurch gekennzeichnet, dass** das Gerät zur Verarbeitung des Ergebnisses der Identifizierung ein Anzeigegerät (5) ist.

11. System nach Anspruch 9, **dadurch gekennzeichnet, dass** das Gerät zur Verarbeitung des Ergebnisses der Identifizierung ein Gerät ist, das ein Steuersignal zum Öffnen eines Zugangsmittels zu einer Zone erzeugt.

12. System nach einem der Ansprüche 10 und 11, **dadurch gekennzeichnet, dass** das Erfassungsgerät ein Fingerabdruck-Lesegerät ist und das biometrische Datenelement ein Fingerabdruck ist.

## Claims

1. Method for identifying a person from information contained in a database **characterized in that** it includes at least the following steps:

   - generating or using a table containing summary indexes corresponding to a set of intervals around a class midpoint, (401),
   - enrolling several biometric data items (407) by carrying out the following steps:

     - for each biometric data item, calculating a binary template linked to each characteristic parameter of a biometric data item, (402),
     - using a hashing method in order to obtain several indexes for each binary template, (403),
     - for each index obtained for a biometric data item, inserting an identifier corresponding to the biometric data item minimizing the Hamming distance between the index in question and the summary indexes bounding a bin, in order to obtain a table containing pairs {biometric data item identifier, person identifier}, (404),
     - capturing at least one biometric data item specific to the person by means of an appropriate sensor and calculating a binary template, (402, 405),
     - searching (408) in the table for the closest biometric data item or items, comparing the captured biometric data item with the biometric data items of the database, generating an identification result in the case of correspondence between said compared data items or of non-identification of the person, (404, 406), and processing the result obtained.

2. Identification method according to claim 1 **characterized in that** fingerprints are used to identify a person, and the following steps are carried out:

   - enrolling several fingerprints by carrying out the following steps:

     - for each fingerprint, calculating a binary template linked to each minutia of a fingerprint using a minutia cylinder-code (MCC) method,

- using a hashing method in order to obtain several indexes for each binary template,
- for each index obtained for a fingerprint, inserting an identifier corresponding to the fingerprint minimizing the Hamming distance between the index in question and the summary indexes bounding said bin, in order to obtain a table containing pairs {minutia identifier, person identifier},
- capturing at least one fingerprint specific to the person by means of an appropriate sensor, and converting said fingerprint into a binary digital format,
- searching in the table for the closest fingerprint or fingerprints and identifying the person or rejecting the identification by comparing the generated binary code with the minutiae stored in the index table.

3. Method according to one of claims 1 or 2 **characterized in that**, for generating a table containing summary indexes, the following steps are carried out:

let h be a hash function and the parameters be
stopCondition1, stopCondition2,$\tau$,$\varepsilon$, MaxHD, min, ST, SI,
where
stopCondition1 and stopCondition2 are two "timers" with predefined values chosen as a function of a compromise between calculation time and precision of the result in the search for fingerprints,
$\tau$ is the probability of generating a bit at '1' on a summary index using a Bernoulli distribution,
$\varepsilon$ is the distance between two indexes neighbouring one and the same class midpoint, where $\varepsilon$ E [3, 7],
MaxHD is the maximum Hamming distance,
min is a rejection parameter or minimum rejection threshold on the number '1', minimum number of bits at '1' to validate a summary index,
ST is the set of class midpoints,
SI is the set of output summary indexes,
h is the size of the hash function,
initializing

$$SI = \emptyset, ST = \emptyset, MaxHD \geq h/3, \tau \geq 1/4, \varepsilon \in \left[0; \frac{h}{10}\right], min \in \left[2; \frac{h}{5}\right],$$

<u>Step 1</u> - creating target class midpoint indexes $IC_i$ spaced apart so as to cover the space of the indexes, while the parameter stopCondition1 is not reached:

creating an index i by generating h bits with a Bernoulli distribution ($\tau$),
if

$$\exists j \in ST/Hd\,(i, j) < MaxHD | minimumNumberOf1(i) <$$

min, then reject the index, where Hd(i,j) is the Hamming distance between the index i and the index j, the total number of bits diverging between two binary vectors i,
otherwise, validate the index i as a class midpoint {valid class midpoint index i} and add it to the set of class midpoints $ST \leftarrow ST + \{i\}$
<u>Step 2 -</u> creating, around each class midpoint index $IC_i$, close indexes without overlap:

whichever j belongs to the set of class midpoints ST
isolate each midpoint i from ST to construct indexes $ST_j$ = {j}

while the value of the parameter stopCondition2 is not reached, carrying out the following steps:

creating an index i by generating h bits with a Bernoulli distribution ($\tau$)
if

$$\exists j' \in ST_j\,such\,that\,Hd\,(i, j') \notin [\varepsilon, 2\varepsilon] | minimumNumberOf1(i) <$$

min, then reject the index i

otherwise, consider the index $i$ to be a valid summary index
{*valid final summary index i*}
updating the set of indexes corresponding to intervals around a class midpoint $ST_j \leftarrow ST_j + \{i\}$, $ST_j$= set of intervals around a midpoint,
generating a set $SI$ of summary indexes which comprises class midpoints and intervals around these class midpoints by adding the values $ST_j$ to the set $SI$ for all the values of j.

4. Method according to claim 2 **characterized in that** the phase of enrolling a person in a database uses the indexes created in the summary index table and includes the following steps:
for each fingerprint:

- calculating the binary templates linked to each minutia on the basis of the MCC method,
- obtaining several indexes for each binary template by using a hash function,
- inserting the fingerprint identifier in several bins of a table: for each index obtained for a fingerprint, the fingerprint identifier which minimizes the Hamming distance between the index in question and the summary indexes bounding the bin is inserted in a bin,
- at the end of this step, the table is filled in with the identifiers of the real fingerprints of persons which make up a database.

5. Method according to claim 4 **characterized in that** it includes the following steps:

let $T$ be the template, $F = \{f_{h1},...,f_{hl}\}$; be a set of hash functions, $l$ be the number of hash functions and $SI$ be the database of summary indexes previously created during the initialization phase,
$SI \neq \emptyset$ initialization of the set of summary indexes,
for each minutia $m_i$ of T,
for each hash function $f_{hk}$ of F, calculating

$$b = f_{hk}(m_i)$$

$$b_1 = \boldsymbol{min_1}\{Hd(b,SI)\} \ Hd$$

the Hamming distance between b and SI

$$b_2 = \boldsymbol{min_2}\{Hd(b,SI)\}$$

enrolling $m_i$ on $b_1$ and $b_2$ of the function $f_{hk}$
$b_1$ and $b_2$ are the lower and upper limits of the interval which defines the boundaries of the index b calculated for each minutia of the template to be enrolled.

6. Method according to one of claims 2 and 4 to 5 **characterized in that** the identification of a person's fingerprint includes the following steps:

let $T$ be *a searched-for template, F = \{f_{h1},..., f_{hl}\}*; $SI$ be the set of summary indexes established previously,
$BD = \{T_1,...\}$ be the set of checked templates,
$LC= \{(T_k,s_k)\}$ be the list of probable candidates where $s_k$ is the accumulation score of each person,
initializing the set of summary indexes established previously and the list of probable candidates at the value zero
initializing a score counter $\mathbb{S}$,
for each minutia $m_i$ of T,
for each hash function $f_{hk}$ of F,
initializing a collision counter $A$, calculating

$$b = f_{hk}(m_i)$$

$$b_1 = \boldsymbol{min_1}\{Hd(b,SI)\}$$

$$b_2 = \boldsymbol{min_2}\{Hd(b,SI)\}$$

the functions $\boldsymbol{min_1}$ and $\boldsymbol{min_2}$ calculate the first and second index minimum respectively,
within the meaning of the Hamming distance Hd between an input index and an index collection,
for each template $t$ found on the indexes $b_1$ and $b_2$
for each minutia j found colliding on $b_1$, $b_2$, reading the collision by counting each line($j$, $t$) of $b_1$, $b_2$, then giving that information to the collision counter $A$
counting the colliding templates

updating the table of the scores for a template $i$, $\mathbb{S}[t] = \mathbb{S}[t] + Max_j\{A[t,j]\}$ where $Max_j\{A[t,j]\}$ is *the maximum value of the sum of the colliding templates,*
creating the list of candidates $LC$ by arranging $\mathbb{S}$ in decreasing order and using the candidate having the highest score value for the identification step.

7. Method according to one of the preceding claims **characterized in that** the hash function is an LSH function.

8. Method according to one of the preceding claims **characterized in that** it includes an additional step of transmitting a signal for opening a security gate following the identification of a person.

9. System for identifying a person containing a device for acquiring a biometric data item of said person, connected to a data processing device (2) comprising a database (3), a processor (4) configured to carry out the steps of the method according to one of claims 1 to 8 and a device for processing the identification result, said database (3) comprising the summary index table corresponding to a set of intervals around a class midpoint.

10. System according to claim 9 **characterized in that** the device for processing the identification result is a display device (5).

11. System according to claim 9 **characterized in that** the device for processing the identification result is a device generating a control signal for opening a means of access to an area.

12. System according to one of claims 10 and 11 **characterized in that** the acquisition device is a device for reading fingerprints and the biometric data item is a fingerprint.

Figure 1

Figure 2

Figure 3

Figure 4

Figure 5

**51** Détection de minutes

M1 (x1,y1,t1)
M2 (x2,y2,t2)
.
.
.
M10 (x10,y10,t10)

≡

**52** Encodage MCC

|  | X | Y | t |
|---|---|---|---|
| M1 | 20 | 80 | 32 |
| M2 | 23 | 72 | 45 |
| M3 | 31 | 65 | 80 |
| M4 | 42 | 50 | 150 |
| M5 | 48 | 30 | 225 |
| M6 | 100 | 23 | 17 |
| M7 | 73 | 19 | 61 |
| M8 | 82 | 16 | 110 |
| M9 | 110 | 10 | 62 |
| M10 | 23 | 7 | 200 |

**53**

|  | i1 | i2 | i3 | i4 | i5 | i6 | i7 | i8 | i9 | i10 | i11 | i12 | i13 | i14 | i15 |
|---|---|---|---|---|---|---|---|---|---|---|---|---|---|---|---|
| BC1 | 0 | 1 | 1 | 1 | 0 | 0 | 1 | 0 | 1 | 0 | 0 | 0 | 0 | 1 | 0 |
| BC2 | 0 | 0 | 1 | 0 | 1 | 0 | 1 | 0 | 0 | 0 | 0 | 1 | 0 | 0 | 1 |
| BC3 | 1 | 0 | 1 | 0 | 1 | 0 | 0 | 0 | 0 | 1 | 0 | 0 | 0 | 1 | 0 |
| BC4 | 0 | 0 | 0 | 0 | 0 | 1 | 1 | 0 | 1 | 0 | 1 | 1 | 1 | 0 | 0 |
| BC5 | 1 | 1 | 1 | 0 | 1 | 0 | 0 | 0 | 1 | 0 | 0 | 1 | 0 | 0 | 0 |
| BC6 | 1 | 0 | 1 | 0 | 1 | 1 | 0 | 0 | 0 | 1 | 0 | 0 | 0 | 1 | 1 |
| BC7 | 0 | 0 | 0 | 0 | 0 | 0 | 0 | 1 | 0 | 1 | 0 | 1 | 0 | 0 | 0 |
| BC8 | 1 | 0 | 0 | 0 | 0 | 0 | 1 | 0 | 0 | 1 | 0 | 1 | 1 | 0 | 0 |
| BC9 | 0 | 1 | 0 | 1 | 1 | 0 | 0 | 0 | 1 | 1 | 0 | 0 | 0 | 0 | 1 |
| BC10 | 0 | 1 | 0 | 0 | 0 | 0 | 1 | 1 | 1 | 0 | 1 | 0 | 0 | 0 | 1 |

Figure 6

EP 4 100 870 B1

Template MCC

| | i1 | i2 | i3 | i4 | i5 | i6 | i7 | i8 | i9 | i10 | i11 | i12 | i13 | i14 | i15 |
|---|---|---|---|---|---|---|---|---|---|---|---|---|---|---|---|
| $BC_1$ | 0 | 1 | 1 | 1 | 0 | 0 | 1 | 0 | 1 | 0 | 0 | 0 | 0 | 1 | 0 |
| $BC_2$ | 0 | 0 | 1 | 0 | 1 | 0 | 1 | 0 | 0 | 0 | 0 | 1 | 0 | 0 | 1 |
| $BC_3$ | 1 | 0 | 1 | 0 | 1 | 0 | 0 | 0 | 0 | 1 | 0 | 0 | 0 | 1 | 0 |
| $BC_4$ | 0 | 0 | 0 | 0 | 0 | 1 | 1 | 0 | 1 | 0 | 1 | 1 | 1 | 0 | 0 |
| $BC_5$ | 1 | 1 | 1 | 0 | 1 | 0 | 0 | 0 | 1 | 0 | 0 | 1 | 0 | 0 | 0 |
| $BC_6$ | 1 | 0 | 1 | 0 | 1 | 1 | 0 | 0 | 0 | 1 | 0 | 0 | 0 | 1 | 1 |
| $BC_7$ | 0 | 0 | 0 | 0 | 0 | 0 | 0 | 1 | 0 | 1 | 0 | 1 | 0 | 0 | 0 |
| $BC_8$ | 1 | 0 | 0 | 0 | 0 | 0 | 1 | 0 | 0 | 1 | 0 | 1 | 1 | 0 | 0 |
| $BC_9$ | 0 | 1 | 0 | 1 | 1 | 0 | 0 | 0 | 1 | 1 | 0 | 0 | 0 | 0 | 1 |
| $BC_{10}$ | 0 | 1 | 0 | 0 | 0 | 0 | 1 | 1 | 1 | 0 | 1 | 0 | 0 | 0 | 1 |

53

61

I fonction, I=3

$H_1=\{i_1, i_5, i_9\}$  $H_2=\{i_8, i_{10}, i_{12}\}$  $H_3=\{i_3, i_7, i_{15}\}$

62

63

Indexation LSH

M*I index

$id_{1,1}, id_{1,2}, id_{1,3}$

| | $F_{H1}$ | $F_{H2}$ | $F_{H3}$ |
|---|---|---|---|
| $id_1$ | 1 | 0 | 6 |
| $id_2$ | 2 | 1 | 7 |
| $id_3$ | 6 | 2 | 4 |
| $id_4$ | 1 | 1 | 2 |
| $id_5$ | 7 | 1 | 4 |
| $id_6$ | 6 | 2 | 5 |
| $id_7$ | 1 | 3 | 2 |
| $id_8$ | 4 | 3 | 2 |
| $id_9$ | 3 | 2 | 1 |
| $id_{10}$ | 1 | 4 | 3 |

54

$id_{10,1}, id_{10,2},$
$id_{10,3}$

M*I
Intervalles
d'index

55

| | $F_{H1}$ | $F_{H2}$ | $F_{H3}$ |
|---|---|---|---|
| $id_1$ | 1-3 | 1-3 | 5-7 |
| $id_2$ | 1-3 | 1-3 | 5-7 |
| $id_3$ | 5-7 | 1-3 | 3-5 |
| $id_4$ | 1-3 | 1-3 | 1-3 |
| $id_5$ | 5-7 | 1-3 | 3-5 |
| $id_6$ | 5-7 | 1-3 | 5-7 |
| $id_7$ | 1-3 | 3-5 | 1-3 |
| $id_8$ | 3-5 | 3-5 | 1-3 |
| $id_9$ | 3-5 | 1-3 | 1-3 |
| $id_{10}$ | 1-3 | 3-5 | 3-5 |

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2951842

- US 2006104484 A

**Littérature non-brevet citée dans la description**

- Comparative Study of Fingerprint Database Indexing Methods. **J. FALADE et al.** International Conference on Cyberworlds. IEEE, 2019